# EUROPEAN PATENT APPLICATION

(11) **EP 4 106 324 A1**
(43) Date of publication of application: **21.12.2022**
(21) Application number: 21754474.1
(22) Date of filing: 10.02.2021
(51) Int. Cl.: H04N 5/91, G06F 3/0481, H04N 21/431, H04N 21/8549

(54) **CONTENT PROCESSING DEVICE, CONTENT PROCESSING METHOD, AND CONTENT PROCESSING PROGRAM**

(30) Priority: 14.02.2020 JP 2020023344
(71) Applicant: Sony Group Corporation, Minato-Ku, Tokyo, 108-0075 (JP)
(72) Inventor: NONOYAMA, Yo, Tokyo 108-0075 (JP)
(74) Representative: D Young & Co LLP
(86) International application number: PCT/JP2021/004867
(87) International publication number: WO 2021/162019

(57) **Abstract**

A content processing apparatus including a content processor that generates new content on the basis of a state of one or a plurality of operation targets selected by a user from among a plurality of operation targets indicating one or a plurality of elements of material content.

## Description

### TECHNICAL FIELD

The present technology relates to a content processing apparatus, a content processing method, and a content processing program.

### BACKGROUND ART

In recent years, due to improvement in performance of a personal computer, a smartphone, or the like and improvement in video editing technology, it has become widespread that a user who does not have specialized knowledge or technology easily edits a video and generates new video content. Furthermore, as a technology capable of efficiently generating content, a technology has been proposed in which new content is created on the basis of a plurality of pieces of information recorded in accordance with a predetermined time axis, and editing or the like can be performed without worrying about the time for displaying a plurality of pieces of information in synchronization (Patent Document 1).

### CITATION LIST

### PATENT DOCUMENT

Patent Document 1: Japanese Patent Application Laid-Open No. 2003-87727

### SUMMARY OF THE INVENTION

### PROBLEMS TO BE SOLVED BY THE INVENTION

However, there is still a problem that it takes labor to edit video content, though the editing of video content has become familiar and a technique capable of efficiently editing and creating the video content in a variety of ways has been proposed.

The present technology has been made in view of such a point, and an object thereof is to provide a content processing apparatus, a content processing method, and a content processing program capable of generating new content including an element only by designating the element included in the content as a material.

### SOLUTIONS TO PROBLEMS

In order to solve the above-described problem, a first technology is a content processing apparatus including a content processor that generates new content on the basis of a state of one or a plurality of operation targets selected by a user from among a plurality of operation targets indicating one or a plurality of elements of material content.

Furthermore, a second technology is a content processing method including generating new content on the basis of a state of one or a plurality of operation targets selected by a user from among a plurality of operation targets indicating one or a plurality of elements of material content.

Moreover, a third technology is a content processing program capable of causing a computer to execute a content processing method including generating new content on the basis of a state of one or a plurality of operation targets selected by a user from among a plurality of operation targets indicating one or a plurality of elements of material content.

### BRIEF DESCRIPTION OF DRAWINGS

Fig. 1 is a block diagram illustrating a configuration of a device 100.
Fig. 2 is a block diagram illustrating a configuration of a content processing apparatus 200.
Fig. 3 is an explanatory diagram of an outline of a UI.
Fig. 4 is an explanatory diagram of an outline of a UI.
Fig. 5 is an explanatory diagram of preview display in a UI.
Fig. 6 is an explanatory diagram of an outline of new content generation.
Fig. 7 is an explanatory diagram of the states of icons in a UI and new content to be generated.
Fig. 8 is an explanatory diagram of the states of icons in a UI and new content to be generated.
Fig. 9 is an explanatory diagram of the states of icons in a UI and new content to be generated.
Fig. 10 is an explanatory diagram of the sizes of icons and the amount of scenes.
Fig. 11 is an explanatory diagram of the states of icons in a UI and new content to be generated.
Fig. 12 is an explanatory diagram of the states of icons in a UI and new content to be generated.
Fig. 13 is an explanatory diagram of the sizes of icons of a case where the length of the content is not set in advance.
Fig. 14 is an explanatory diagram of the sizes of icons of a case where the length of content is set in advance.
Fig. 15 is an explanatory diagram of the sizes of icons of a case where the length of content is set in advance.
Fig. 16 is an explanatory diagram of a UI in an application example of the present technology.

### MODE FOR CARRYING OUT THE INVENTION

Hereinafter, an embodiment of the present technology will be described with reference to the drawings. Note that description will be given in the following order.
<1. Embodiment>
[1-1. Configuration of Device 100]
[1-2. Configuration of Content Processing Apparatus 200]
[1-3. Processing in Content Processing Apparatus 200]
[1-3-1. Configuration of UI]
[1-3-2. Generation Processing of New Content]
<2. Application Example>
<3. Modification>

### <1. First Embodiment>

### [1-1. Configuration of Device 100]

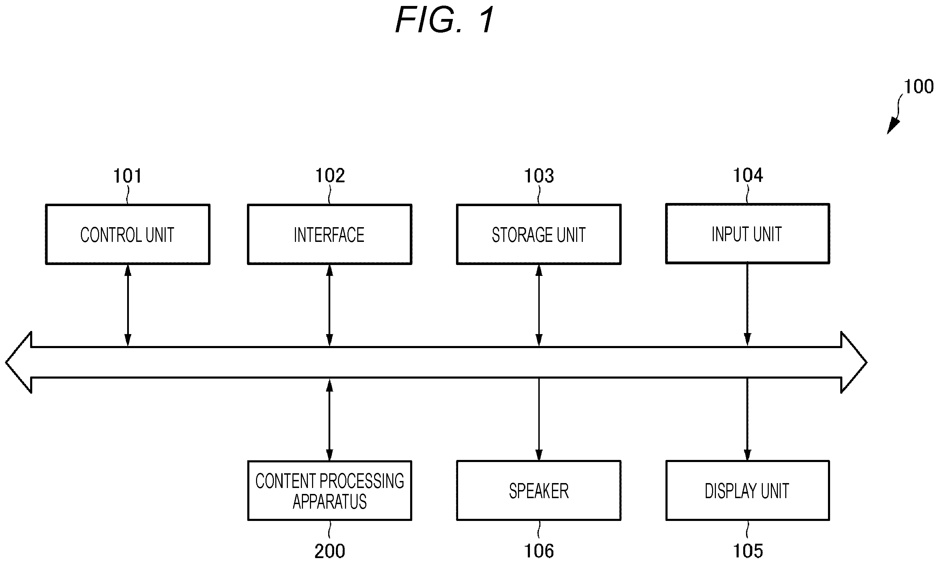

First, a configuration of a device 100 will be described with reference to Fig. 1. The device 100 includes a control unit 101, an interface 102, a storage unit 103, an input unit 104, a display unit 105, a speaker 106, and a content processing apparatus 200.

The control unit 101 includes a central processing unit (CPU), a random access memory (RAM), a read only memory (ROM), and the like. The CPU controls the entire device 100 and each unit by executing a variety of processes according to a program stored in the ROM and issuing commands.

The interface 102 is an interface with another apparatus, the Internet, or the like. The interface 102 may include a wired or wireless communication interface. Furthermore, more specifically, the wired or wireless communication interface may include cellular communication such as 3TTE, Wi-Fi, Bluetooth (registered trademark), near field communication (NFC), Ethernet (registered trademark), High-Definition Multimedia Interface (HDMI) (registered trademark), universal serial bus (USB), or the like. Furthermore, in a case where at least a part of the device 100 and at least a part of the content processing apparatus 200 is implemented by a same apparatus, the interface 102 may include a bus in the apparatus, data reference in a program module, and the like (which will be hereinafter also referred to as interfaces in the apparatus). Furthermore, in a case where the device 100 and the content processing apparatus 200 are implemented in a distributed manner in a plurality of apparatuses, the interface 102 may include different types of interfaces for the respective apparatuses. For example, the interface 102 may include both a communication interface and an interface in an apparatus.

The storage unit 103 is, for example, a mass storage medium such as a hard disk or a flash memory. The storage unit 103 stores various applications, data, and the like to be used by the device 100. Furthermore, content to be processed by the content processing apparatus 200 or new content generated by the content processing apparatus 200 may be stored.

The input unit 104 is used by the user to input various instructions to the device 100. When a user makes an input to the input unit 104, input information according to the input is supplied to the control unit 101. Then, the control unit 101 performs various processes corresponding to the input information. Furthermore, the input information is also supplied to the content processing apparatus 200, and the content processing apparatus 200 performs processing according to the input information. Instead of physical buttons, the input unit 104 may use a touch panel integrally formed with the display unit 105, voice input by voice recognition, gesture input by human body recognition, or the like.

The display unit 105 is a display that displays content, an image/video, a user interface (UI) for generating new content, new content generated by the content processing apparatus 200, and the like. Details of the UI will be described later.

The speaker 106 outputs voice of video content, voice content, voice for a user interface, and the like.

The device 100 may be any apparatus such as a smartphone, a personal computer, a tablet terminal, Internet of Thing (IOT) device, or a wearable device 100 that can receive an input from the user and display and present content to the user.

### [1-2. Configuration of Content Processing Apparatus 200]

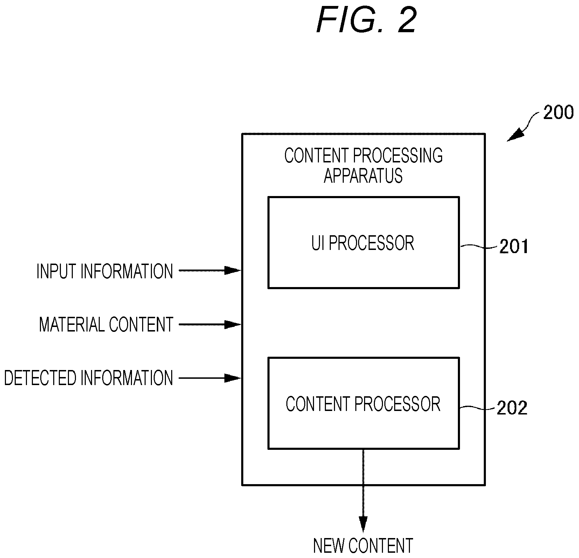

Next, the configuration of the content processing apparatus 200 will be described with reference to Fig. 2. The content processing apparatus 200 includes a UI processor 201 and a content processor 202. Note that description will be given on the assumption that the content is video content in the present embodiment. Furthermore, the content processing apparatus 200 generates new content from existing content, and the existing content will be referred to as material content while the new content to be generated will be referred to as new content. An example of a material content is a captured video.

The content processing apparatus 200 is supplied with input information inputted by the user via the UI, data of the material content, and detected information of the material content from the device 100. The detected information includes subject information regarding a person, an object, or the like as an element of the material content, which is detected by known subject detection processing or face detection processing. Furthermore, the detected information includes smile information regarding a smile of a person, a degree of a smile, or the like as an element of the material content to be detected by known smile detection processing. Furthermore, the detected information includes motion information of a subject, specific scene information, or the like as an element of material content to be detected by known movement detection processing or scene detection processing. Furthermore, the detected information includes information regarding a color of a subject or a background as an element of the material content to be detected by known color detection processing, and the color information includes RGB, luminance, a color difference, or the like. Moreover, the detected information includes voice information regarding a type of voice, a volume of voice, or the like as an element of the material content to be detected by known voice detection processing.

The detected information includes a start point and an end point of a scene including an element detected in various detection processing in the material content, and further includes length information of the scene. Moreover, the detected information includes the total amount of all scenes including elements detected in various detection processing. Note that the detection processing may be performed by the device 100, may be performed by an external apparatus other than the device 100 and supplied to the device 100, or may be performed by the content processing apparatus 200. In a case where the device 100 or the content processing apparatus 200 performs the detection processing, it is preferable to generate detected information for automatically performing the detection processing on the material content when the material content is supplied.

The UI processor 201 displays a UI for moving image generation on the display unit 105 of the device 100, and performs processing of changing the UI according to an input by the user.

The content processor 202 generates and outputs new content on the basis of the supplied data of one or a plurality of pieces of material content, the detected information of the material content, and the input information. The material content may be supplied from the device 100 to the content processor 202, or may be supplied from an external apparatus other than the device 100, an external server, or the like via a network or the like.

The content processing apparatus 200 is configured as described above. The content processing apparatus 200 is implemented by executing a program, and the program may be installed into the device 100 in advance, or may be distributed by downloading, a storage medium, or the like and installed by the user or the like. Furthermore, the content processing apparatus 200 may operate in an external apparatus different from the device 100, for example, a server, a cloud, or the like. Moreover, the content processing apparatus 200 may be implemented not only by a program but also by a combination of a dedicated apparatus, a circuit, and the like by hardware having the function.

### [1-3. Processing in Content Processing Apparatus 200]

### [1-3-1. Configuration of UI]

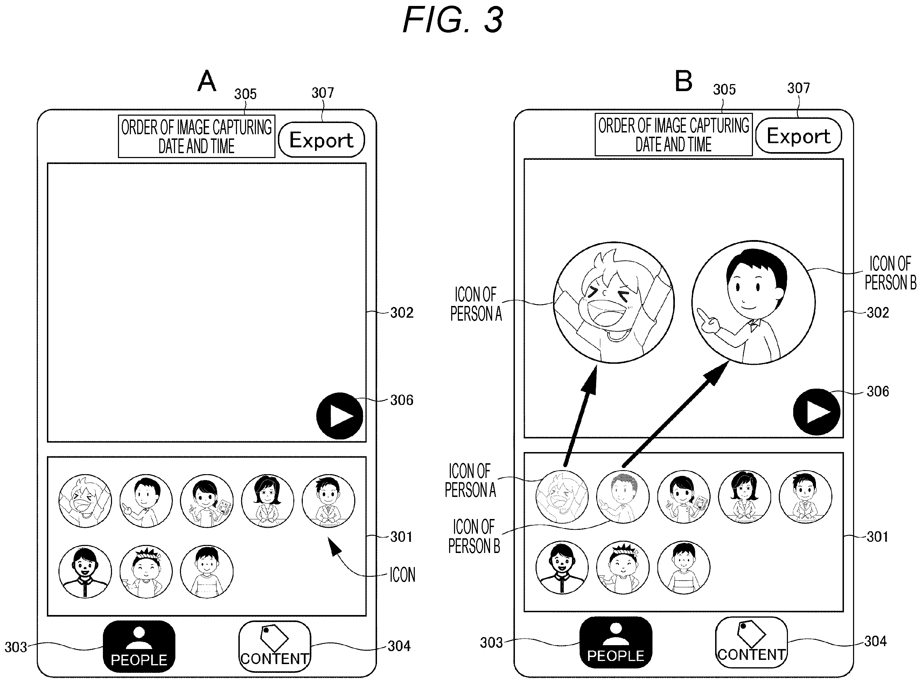

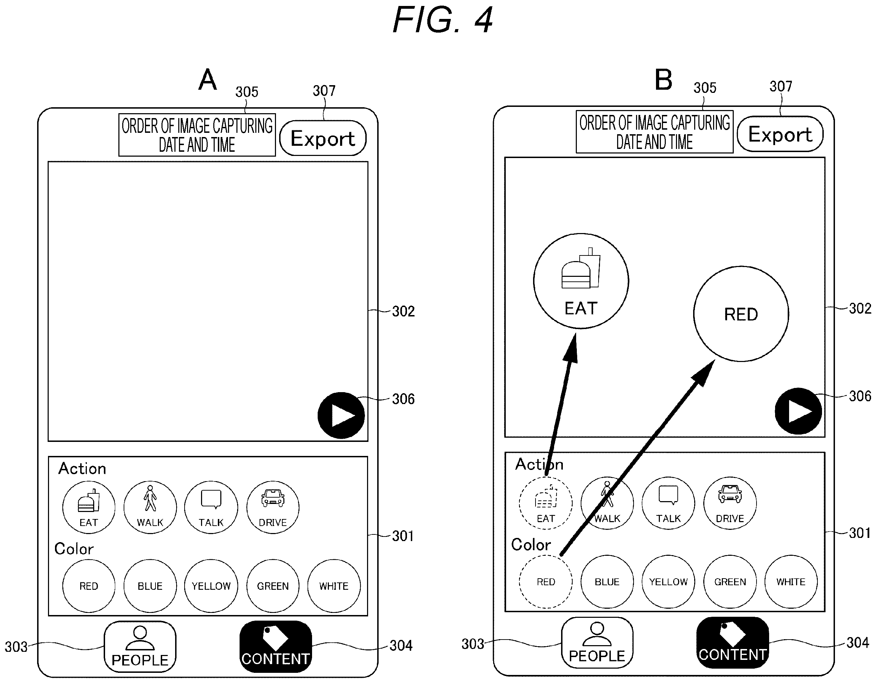

Next, the configuration of the UI to be displayed on the display unit 105 will be described with reference to Figs. 3 and 4. The UI includes an icon display area 301 and an editing area 302. Moreover, the UI includes a PEOPLE tab button 303 and a CONTENT tab button 304 as tab switching buttons, an order setting button 305, a preview play button 306, and an export button 307.

The icon display area 301 is an area in which a list of icons indicating elements detected from the material content by the detection processing is displayed. Elements of the material content indicated by the icons include a subject (person, object, etc.), a motion, a color, and the like. In the present embodiment, an icon of a face of a person indicates a person who is an element detected from the material content, an icon of a motion mark indicates a motion of a person who is an element detected from the material content, and an icon of a color name indicates a color which is an element detected from the material content.

In the icon display area 301, display contents can be switched by an input to a tab selection button. In the present embodiment, when the PEOPLE tab button 303 is selected as illustrated in Fig. 3, the icon display area 301 is brought into a state of displaying a list of icons indicating persons detected in the content. Furthermore, when the CONTENT tab button 304 is selected as illustrated in Fig. 4, the icon display area 301 is brought into a state of displaying a list of icons indicating motions and colors detected in the material content. An icon corresponds to an operation target in the claims.

Examples of a motion that is an element of the material content include eating, walking, running, talking, sleeping, driving a car, and the like, for example. Note that the examples of a motion described here are merely illustrative, and a motion may be any other motion that can be detected by known detection processing.

The color of the content is a color closest to an average of colors of pixels in a plurality of frame images constituting a scene of the material content which is a video. Furthermore, the color may be a color or the like that occupies the largest area in units of pixels in the frame image.

When the material content and the detected information are supplied to the content processing apparatus 200, the UI processor 201 cuts out an image indicating an element of the material content indicated by the detected information from a frame constituting the material content and displays a list of images as icons in the icon display area 301.

As illustrated in Figs. 3B and 4B, the editing area 302 is an area in which the user arranges an icon from the icon display area 301, and further changes the state of the icon to determine details of the new content to be generated by the content processor 202. The user can move an arbitrary icon from the icon display area 301 to the editing area 302 and arrange the icon by, for example, dragging and dropping.

The state information of the icon in the editing area 302 based on input information is supplied to the content processor 202, and the content processor 202 generates new content on the basis of the state information. Note that an icon moved from the icon display area 301 to the editing area 302 may be displayed lightly or in a small size in the icon display area 301 so as to be able to be distinguished from other icons that have not been moved so that it can be recognized that the icon has been moved.

When an icon is arranged in the editing area 302, a scene including an element of the material content indicated by the icon is incorporated in the new content. For example, when an icon of a person is moved to the editing area 302, a scene in which the person indicated by the icon appears in the material content is incorporated in the new content.

Furthermore, the size of the icon in the editing area 302 corresponds to the amount of the new content of a scene including the element of the material content indicated by the icon. Therefore, when the icon is enlarged, the amount of a scene including the element indicated by the icon increases in the new content, while when the icon is reduced, the amount of a scene including the element indicated by the icon decreases in the new content. Details of the size of an icon will be described later.

Moreover, when a plurality of icons is brought into a superimposed state in the editing area 302, a scene including elements respectively indicated by the plurality of icons is extracted from the material content to generate new content. For example, in a case where an icon of person A and an icon of person B are superimposed, a scene in which both person A and person B appear is extracted from the material content to generate new content. Details of the superimposition of the icons will be described later.

The arrangement of an icon, the size of an icon, and the superimposed state of icons in the editing area 302 correspond to the state of the operation target in the claims, and the content processor 202 generates new content on the basis of the state of an icon.

The order setting button 305 is to designate the order in which scenes including the element of the material content indicated by the icon extracted from the material content are aligned to generate the new content. Examples of the order include order of image capturing date and time, order of the number of persons, order of smile, and order of sound volume.

The order of image capturing date and time is to generate new content by aligning a plurality of scenes extracted from the material content in the order of image capturing date and time of the material content. Scenes may be aligned in order from a scene having an image capturing date and time that is older, or may be aligned in order from a scene having an image capturing date and time that is newer.

The order of the number of persons is to generate new content by aligning a plurality of scenes extracted from the material content in the order of the number of persons existing in each scene. As the reproduction of the new content progresses, the number of persons may increase in order, or may decrease in order.

The smile order is to generate new content by aligning a plurality of scenes extracted from the material content in the order of the degree or number of smiles of persons existing in each scene. The degree of a smile is obtained by classifying the state of the smile on the basis of the position of the feature point of the face and the like by known smile detection processing. The order of smile may be an order in which the degree of a smile increases as the reproduction of the new content progresses (gradually changing from a faint smile to a laughter) or an order in which the degree of smile decreases (gradually changing from a laughter to a faint smile). Furthermore, the order of the number of smiles means that scenes are aligned in an order in which the number of smiles increases or decreases as the reproduction of the new content progresses.

The sound volume order is to generate new content by aligning a plurality of scenes extracted from material content in descending order or ascending order of sound volume of each scene. The sound volume of the scene may be an average sound volume of the scene, or may be either a maximum value or a minimum value of the sound volume of the scene.

It is assumed that the generation of new content can be performed without setting the aligning order of the scenes, and in a case where there is no setting of the order, the scenes may be aligned in order of image capturing date and time.

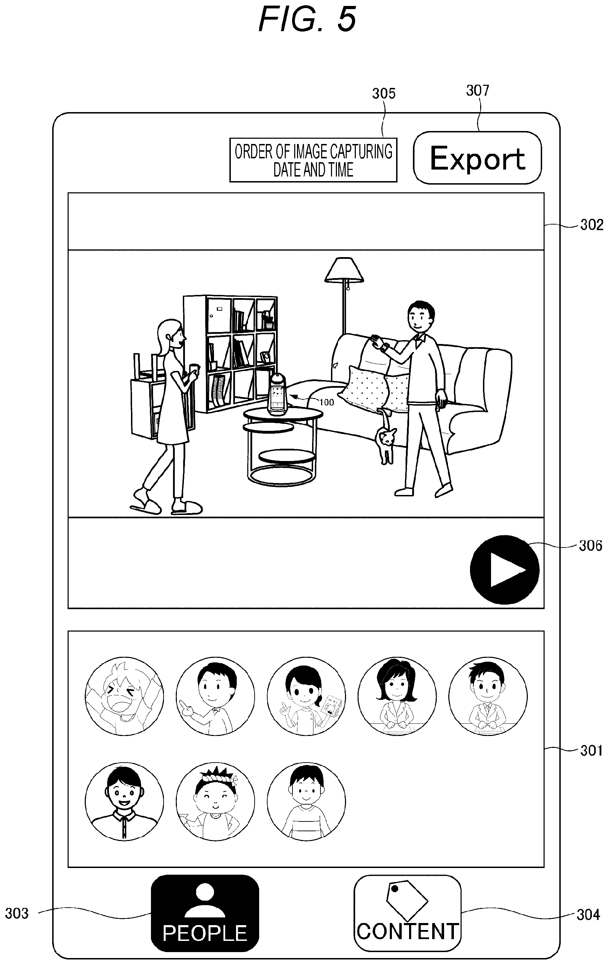

The preview play button 306 is a button for instructing reproduction of the preview of new content. When there is an input to the preview play button 306, the editing area 302 transitions to a preview reproduction state as illustrated in Fig. 5, and the preview of the new content generated on the basis of the state of the icon in the editing area 302 at that time is reproduced. Note that the preview may be displayed on the entire screen of the display unit 105.

The export button 307 is a button for the user to input a new content generation instruction. When there is an input to the export button 307, the content processor 202 generates new content on the basis of the state of the icon in the editing area 302 at that time. The generated new content is stored in the storage unit 103 or the like, and can be reproduced or transmitted to the outside using the interface 102.

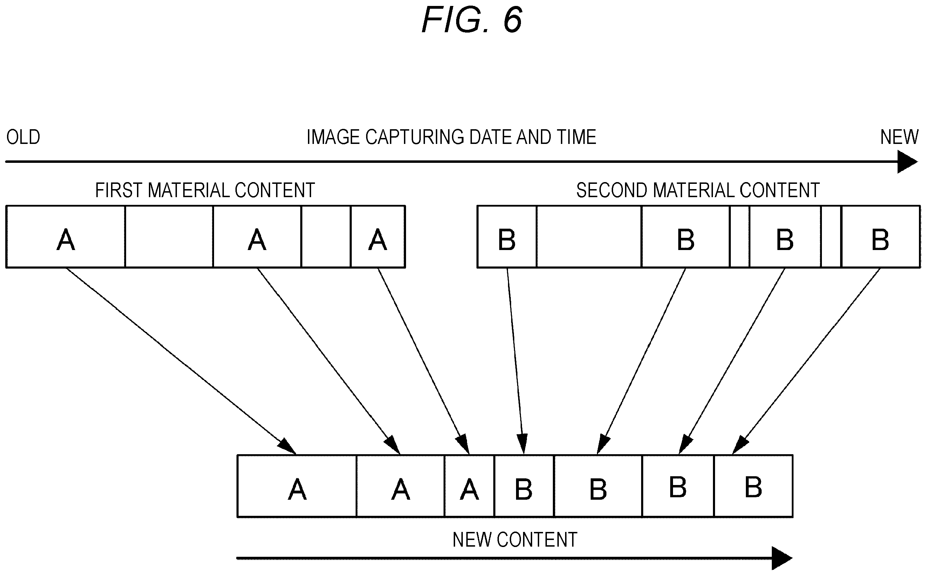

Fig. 6 illustrates an outline of generation of new content based on input information inputted using the UI. In the example in Fig. 6, it is assumed that the material content includes two material contents: first material content and second material content. Furthermore, as illustrated in Fig. 3B, it is assumed that the new content is generated on the basis of the input information that the icon of person A and the icon of person B are arranged in the editing area 302 of the UI, and the order of aligning the scenes is the order of image capturing date and time. Scenes in which person A appears and scenes in which person B appears are extracted from the first material content and the second material content and aligned in order of image capturing date and time to generate new content.

Note that the number of material contents is not limited to two, and may be one, or three or more. The number of material contents is not limited. Furthermore, although the first material content includes only scenes including an element of person A and the second material content includes only scenes including an element of person B in Fig. 6, it is clear that there may be a case where one material content includes both a scene of person A and a scene of person B.

In a case where a scene is extracted from the material content, all the scenes including an element indicated by an icon may be extracted, or scenes may be extracted on the basis of a predetermined condition. The extraction conditions include image capturing date and time, a smile detection result, sound volume, and the like.

The image capturing date and time is a method of preferentially extracting a scene having image capturing date and time that is early or late, or a method of designating a specific image capturing date and time to extract a scene. The smile detection result is a method of extracting a scene which includes an element indicated by an icon and in which a smile has been detected. The sound volume is a method of extracting a scene having a sound volume equal to or higher than a predetermined value, or equal to or lower than a predetermined value from among scenes including an element indicated by an icon. The extraction condition may be any one of these conditions, or a combination of a plurality of conditions.

By extracting a scene using a specific condition in this manner, it is possible to give a sense of unity to details of the new content. Furthermore, in a case where all the scenes including the element indicated by the icon cannot incorporated in the new content, such as a case where the length of the new content is set in advance, a case where the amount of scenes in the new content is limited by a rate to other scenes, or the like, more scenes required by the user can be incorporated in the new content by extracting the scene on the basis of the condition.

The UI may be provided with a button or the like for setting the extraction condition. Note that, since many users usually want to see a scene of a smile and to gather scenes of smiles in a video content, it is preferable to extract a scene on the basis of a result of smile detection unless a default is set or user designation is made.

### [1-3-2. Generation Processing of New Content]

Next, a state of an icon in the UI and new content to be generated on the basis of the state of the icon will be described. As described above, the user moves an icon indicating an element to be incorporated in the new content from among icons existing in the icon display area 301 to the editing area 302 and arranges the icon.

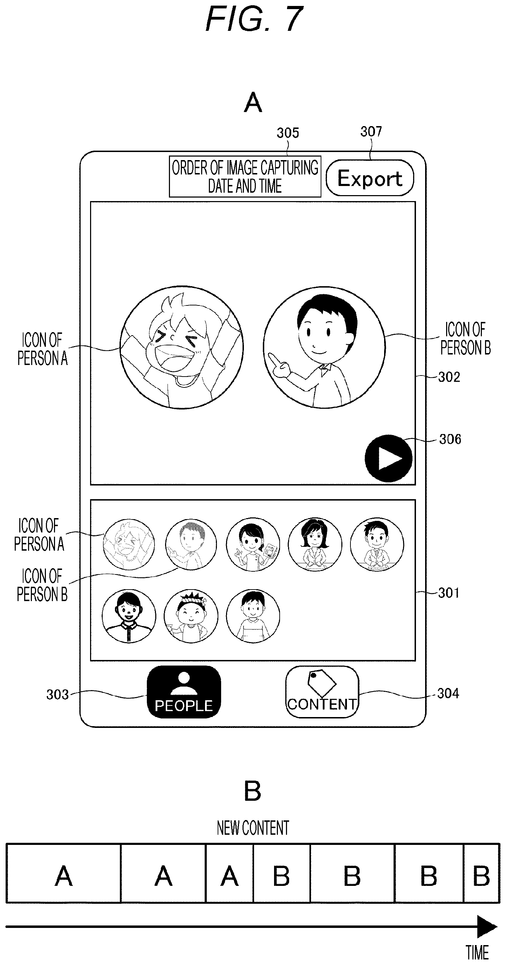

For example, in a case where an icon of person A and an icon of person B are arranged in the editing area 302 as illustrated in Fig. 7A, the content processor 202 generates new content by extracting the scenes of person A and the scenes of person B from the material content and aligning the scenes as illustrated in Fig. 7B. Moreover, in a case where the sizes of the icon of person A and the icon of person B are the same, the scenes of person A and the scenes of person B have the same rate, that is, the same amount in the new content as illustrated in Fig. 7B.

Furthermore, in the editing area 302, the user can change the size of an icon to any size. The size of the icon corresponds to the amount of scenes in the new content in which the element indicated by the icon appears. Therefore, by changing the size of the icon in the editing area 302, the amount of scenes of the new content in which the element indicated by the icon appears can be adjusted.

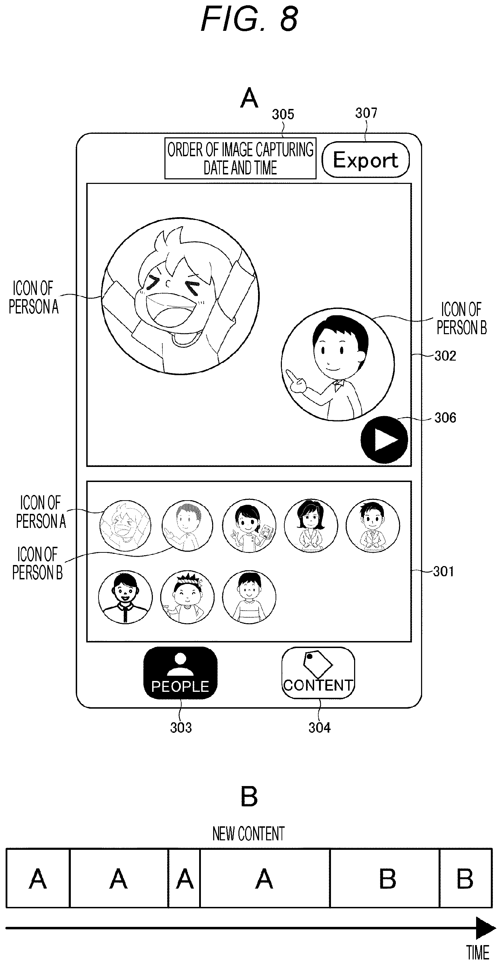

For example, when the icon of person A is made larger than the icon of person B in the editing area 302 as illustrated in Fig. 8A, the amount of scenes of person A becomes larger than the amount of scenes of person B in the new content as illustrated in Fig. 8B.

Regarding the relationship between the size of the icon and the amount of scenes in the new content, for example, the area of the icon and the amount of scenes including the element indicated by the icon can be made to correspond to each other. For example, in a case where the area of the icon of person A is twice the area of the icon of person B, the amount of scenes of person A is twice the amount of scenes of person B in the new content. Furthermore, the diameter of the icon may correspond to the amount of scenes including the element indicated by the icon. For example, in a case where the diameter of the icon of person A is twice the diameter of the icon of person B, the length of the scenes of person A in the new content is twice the length of the scenes of person B. Therefore, the user can intuitively adjust the length of the scene by means of the size of the icon. Note that the relationship between the size of the icon and the amount of scenes is merely illustrative, and the present technology is not limited to this value. The size of this icon can be changed by, for example, a pinch-in/pinch-out operation.

The maximum size of the icon is determined on the basis of the detected information. The maximum size of the icon corresponds to the total amount of all scenes including the element indicated by the icon in the material content. Accordingly, when the reference for extraction is not set and the icon is set to the maximum size, all scenes including the element indicated by the icon are incorporated in the new content extracted from the material content.

Furthermore, in the editing area 302, the user can superimpose a plurality of icons by changing the positions of the icons. The superimposed state of the icons corresponds to a combination of elements respectively indicated by the superimposed icons, and a scene in which the elements indicated by the respective icons are combined can be incorporated in the new content by superimposing the icons.

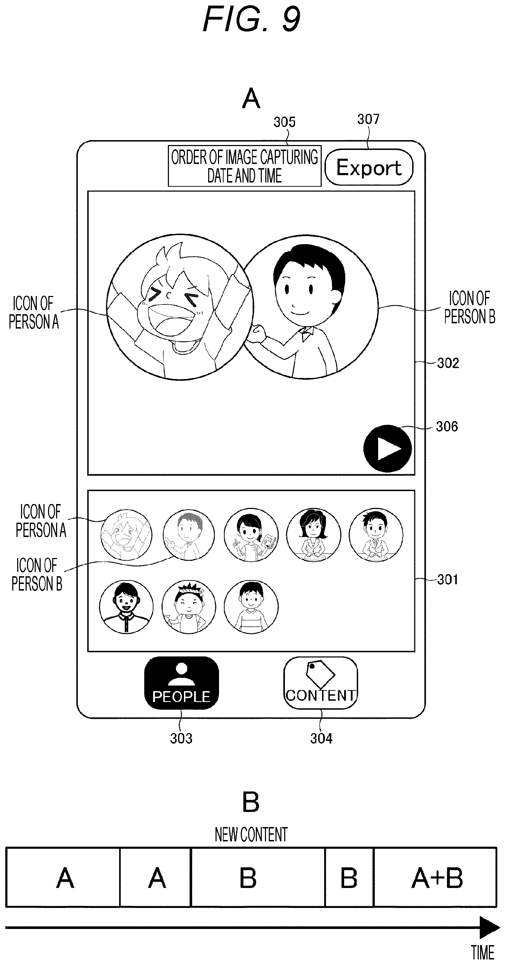

For example, when the icon of person A and the icon of person B are superimposed in the editing area 302 as illustrated in Fig. 9A, a new content is generated by incorporating a combination of an element of person A and an element of person B, that is, a scene in which person A and person B appear together as illustrated in Fig. 9B. In this manner, a scene included in the new content can be adjusted by superimposing the icons. This superimposition of the icons can be performed by, for example, a drag operation.

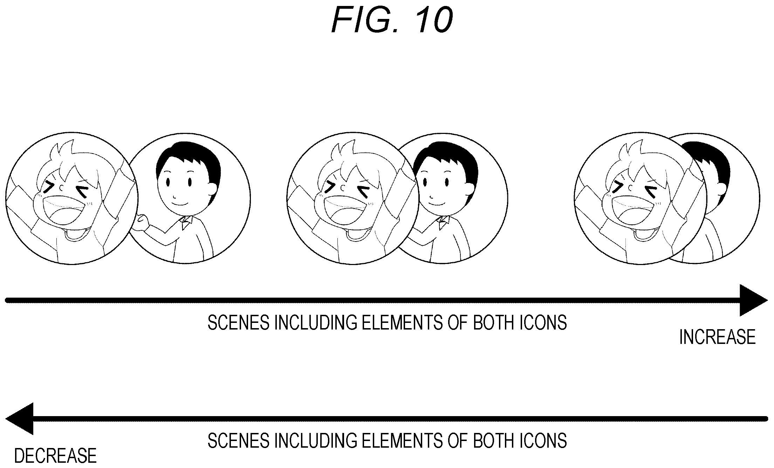

Furthermore, the size (area) of the superimposition region of the plurality of icons corresponds to the amount of the scene in the new content in which the elements respectively indicated by the plurality of icons are combined. When the size of the superimposition region is increased in a state where the icons are superimposed as illustrated in Fig. 10, the amount of scenes including the elements indicated by the icons in the new content increases. On the other hand, when the size of the superimposition region is reduced, the amount of scenes including the elements indicated by the icons in the new content decreases. Therefore, it is possible to adjust the amount of scenes that are a combination of elements, in the new content.

Accordingly, in a case where the area of the region where the icon of person A and the icon of person B are superimposed is small as illustrated in Fig. 9A, the scenes of only person A and the scenes of only person B are incorporated in the new content in addition to the scene in which person A and person B appear together as illustrated in Fig. 9B. When the region where the icon of person A and the icon of person B are superimposed is increased as compared with the state illustrated in Fig. 9A, the amount of scenes in which person A and person B appear together in the new content increases, and the amount of scenes in which only person A or only person B appears decreases.

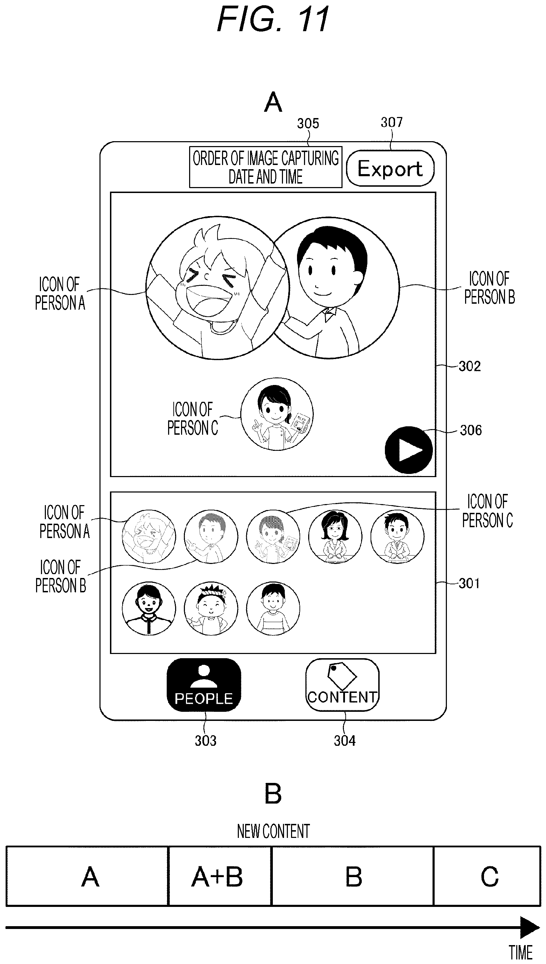

Note that superimposed icons and non-superimposed icons can coexist in the editing area 302. For example, in a case where the icon of person A and the icon of person B are superimposed and the icon of person C is not superimposed as illustrated in Fig. 11A, new content is generated by incorporating a scene in which only person C appears in addition to a scene in which person A and person B appear together as illustrated in Fig. 11B, a scene of only person A, and a scene of only person B.

Note that the superimposition of icons is not limited to two icons, and three or more icons may be superimposed in a row, and the superimposition method is not limited.

Although the above description has been given using a case of an icon indicating a person as an example, the new content is similarly generated using an icon indicating a motion or an icon indicating a color. The icons to be arranged in the editing area 302 are not limited to the same type, and an icon indicating a person, an icon indicating a motion, and an icon indicating a color can be arranged in a mixed manner.

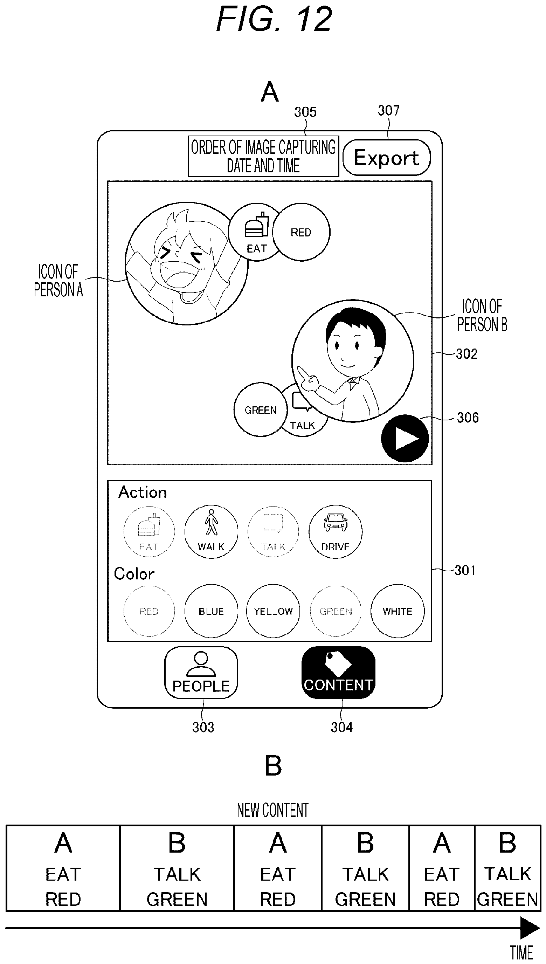

For example, in a case where an icon indicating person A, an icon indicating meal (EAT), and an icon indicating red are superimposed in the editing area 302 as illustrated in Fig. 12A, new content is generated by incorporating a red scene in which person A is having a meal. Furthermore, in a case where an icon indicating person B, an icon indicating conversation (TALK), and an icon indicating green are moved to the editing area 302 and superimposed as illustrated in Fig. 12B, new content is generated by incorporating a green scene in which person B is having a conversation.

Note that, in a case where a plurality of icons is superimposed in the editing area 302 in this manner, there may be a case where a scene in which elements indicated by icons are combined does not exist in the material content. For example, this is a case where an icon of person A and an icon of person B are superimposed but there is no scene in which person A and person B simultaneously appear in the material content. In advance detection processing, a pattern of the combination of the elements indicated by the icons is also detected in the material content, and in a case where the combination of the elements indicated by the superimposed icons does not exist in the material content, the superimposed state of the icon is forcibly released. Therefore, the user can understand that there is no scene in which the elements indicated by the superimposed icons are combined.

Next, the length of the new content will be described. The new content can be generated in two cases: a case where the length is not set in advance, and a case where the length is set in advance. The new content may be set in either case by default, or may be selected by the user each time new content is generated.

In a case where the length is not set, the length of the new content is determined by the length and the amount of a plurality of scenes extracted from the material content and incorporated in the new content. On the other hand, in a case where the length of the new content is set in advance, scenes within the length are extracted from the material content, and the new content is generated. Since the method of adjusting the length of the scenes in the new content by changing the size of the icon is different, this point will be described.

First, a case where the length of the new content is not set in advance will be described. In this case, the size of an icon in the editing area 302 indicates the absolute amount of the new content of the scenes including the element indicated by the icon. Accordingly, the size of the icon and the length of the scene are associated with each other. A reference of this association between the size of the icon and the length of the scenes may be set in advance as, for example, 3 cm/30 seconds for the diameter. Then, the size of the icon in the editing area 302 may be determined from the length of the scene including the element indicated by the icon arranged in the editing area 302 obtained by the detection processing and the reference thereof. Furthermore, even in a case where the size of the icon is changed, the amount of the scene including the element indicated by the icon in the new content is determined according to the size on the basis of the reference.

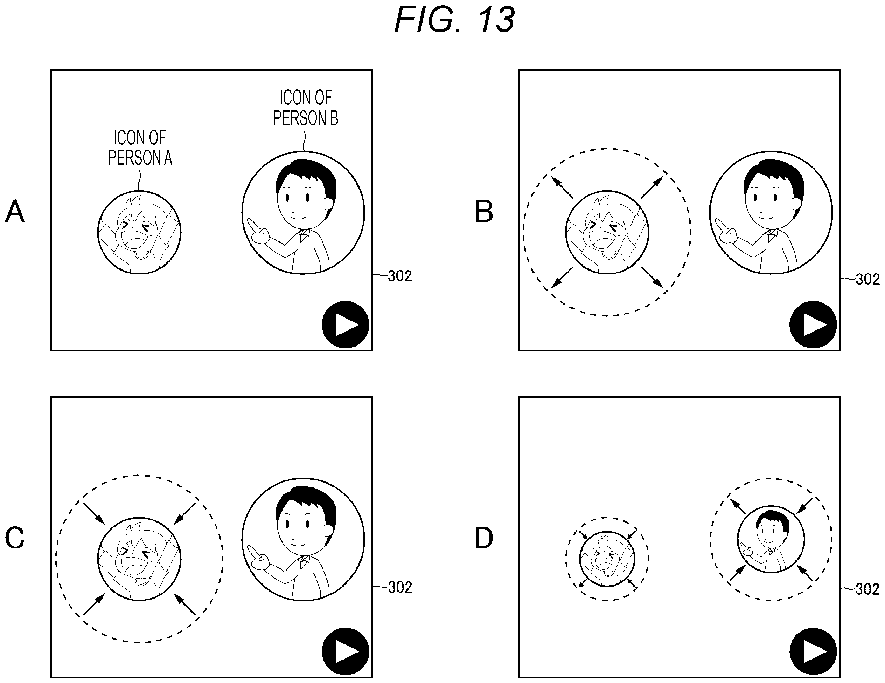

Figs. 13 to 15 illustrate editing areas 302 extracted from the UI. As illustrated in Fig. 13A, in an initial state in which icons are arranged in the editing area 302, each icon is displayed in a maximum size by default. This is because no matter how long a scene including the element indicated by the icon is, the scene can be incorporated in the new content in a case where the length of the new content is not set in advance. Furthermore, by indicating the maximum size of the icon by default, it is possible to grasp how many scenes including the element of the icon exist by comparison with other icons.

Since the icon is displayed in the maximum size, when the icon is changed to the maximum size or more as illustrated in Fig. 13B, the icon is forcibly resized to the maximum size as illustrated in Fig. 13C. In this case, other icons existing in the editing area 302 are not affected by the resizing. As illustrated in Fig. 13D, the user can change the size of the icon to any size, which is the maximum size or less, to adjust the length of the new content of the scene including the element indicated by the icon.

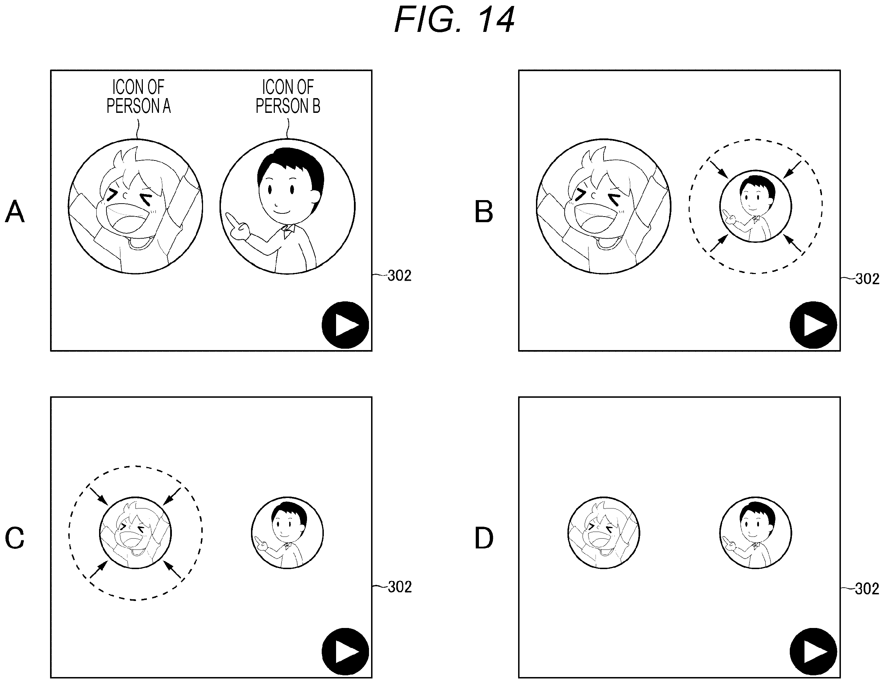

Next, a case where the length of the new content is set in advance will be described. In this case, the size of the icon in the editing area 302 represents the ratio of scenes including the element of the icon in the new content. As illustrated in Fig. 14A, when icons are moved from the icon display area 301 to the editing area 302, the sizes of all the icons are the same in the initial state. When the sizes of the icons are the same, the amount of new content of the respective scenes each including an element of each icon is the same.

By changing the size of an icon in the editing area 302, the ratio of the scene including the element of each icon in the new content can be changed. For example, as illustrated in Fig. 14B, assume a case in which the icon of person A is made larger than the icon of person B by making the icon of person B smaller. Since the size of the icon corresponds to the ratio of the scene, the amount of scenes of person A increases and the amount of scenes of person B decreases in the new content in this case even if the size of the icon of person A is not changed. This applies to the reverse.

Here, it is assumed that the amount of scenes of person A is smaller than the amount of scenes of person B in the material content. As illustrated in Fig. 14A, both icons are displayed in the same size by default. In this state, as described above, the scenes of person A and the scenes of person B have the same amount in the new content.

Then, as illustrated in Fig. 14B, it is assumed that the user makes the icon of person B smaller in order to make the amount of scenes of person B smaller than the amount of scenes of person A in the new content. In this case, since the amount of scenes of person A is smaller than the amount of scenes of person B, the icon of person A cannot be made larger than the icon of person B. In this case, the icon of person A is forcibly resized to the same size as the icon of person B as illustrated in Fig. 14C, and the state illustrated in Fig. 14D is obtained. In the state of Fig. 14D, since the sizes of both icons are the same, the scenes of person A and the scenes of person B have the same rate, that is, the same amount in the new content.

In a case where it is impossible to generate the new content indicated in the editing area 302 from the element included in the material content in this manner, the sizes of the icons are forcibly set to the same size, and the lengths of the scenes including the elements of the respective icons in the new content become the same.

Even in a case where there are three or more icons, the rate of the scenes each including an element of each icon in the new content can be adjusted by changing the sizes of the icons in the editing area 302, similarly to the above-described case that includes two icons.

Here, the icon of person A, the icon of person B, and the icon of person C are arranged in the editing area 302, and the amount of the scenes of person A is smaller than the amount of the scenes of person B, and the amount of the scenes of person C is larger than the amount of the scenes of person A and person B in the material content.

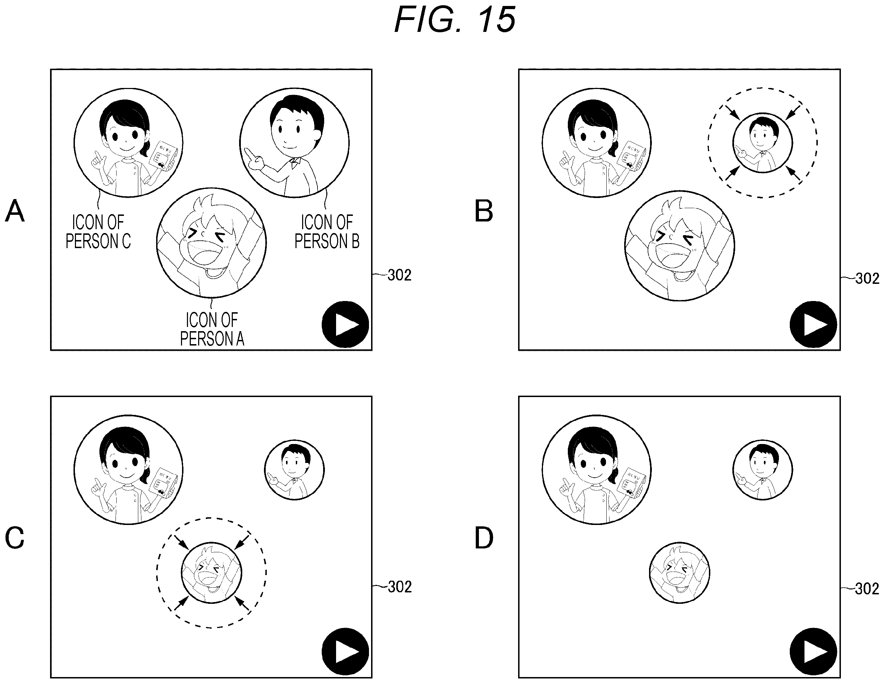

In this case, it is assumed that the user makes the icon of person B smaller in order to make the amount of the scenes of person B smaller than the amount of the scenes of person A in the new content. In this case, since the amount of scenes of person A is smaller than the amount of scenes of person B, the icon of person A cannot be made larger than the icon of person B. In this case, the icon of person A is forcibly resized to the same size as the icon of person B as illustrated in Fig. 15. However, since the amount of scenes of person C is larger than the amount of scenes of person A and the amount of scenes of person B in the material content, the icon of person C is not forcibly resized and the size is maintained.

The UI may be provided with a button for setting the length of the new content. Note that, in a case where the length of the new content is set in advance and the total of the scenes extracted from the material content is less than the set length, it is preferable to cause the UI to give notification of the fact and allow the user to change the state of the icon in the editing area 302 or change the length of the new content.

The present technology performs processing as described above. With the present technology, a user can generate new content including an element only by designating the element included in material content in the state of an icon. Accordingly, it is possible to easily generate new content without performing work such as confirmation, extraction, or trimming of details of the material content.

### <2. Application Example>

Next, application examples of the present technology will be described. The present technology can be applied not only to a captured video content as described above but also to a live relay video. As an example of application to a live relay, a sport relay can be cited. In this case, the material content to be supplied to the content processing apparatus 200 is a live relay video, and the new content to be generated by the content processing apparatus 200 is a video of a sport relay to be presented to the user.

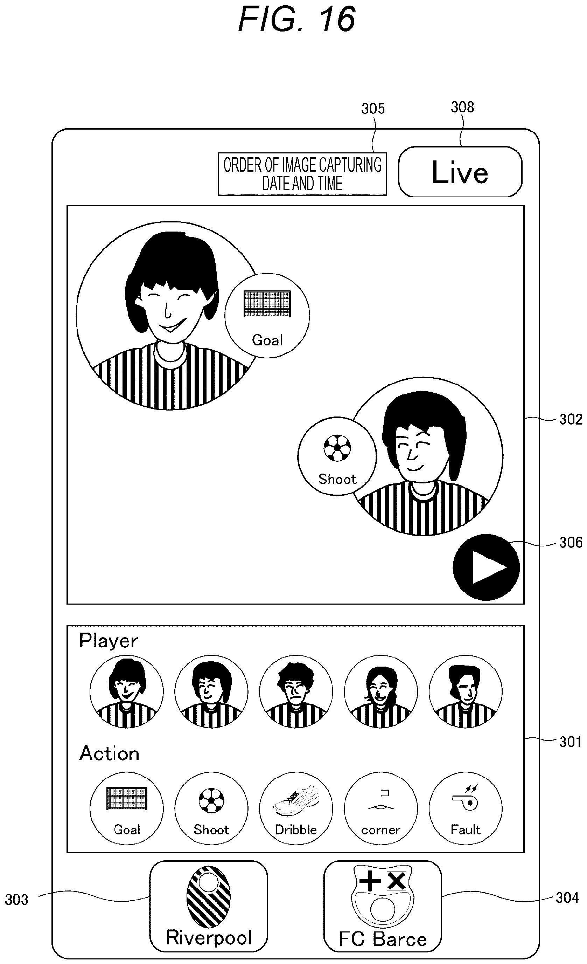

As illustrated in Fig. 16, in the case of a live video of a sport relay, an icon indicating the face of a player performing a sport is displayed as an element of the material content in the icon display area 301 in the UI. In the case of a sport, since information on participating players is provided in advance, an icon indicating a player may be displayed on the basis of the information. Furthermore, the player displayed as the icon may be a player detected by subject detection processing as in the embodiment. However, in the case of subject detection processing, since there is no video until the live relay is started, the icon is displayed after the live relay is started.

Furthermore, an icon indicating a characteristic motion of the sport is displayed in the icon display area 301. For example, in a case where the sport is soccer, the motion includes a goal, a shoot, a dribbling, a corner kicking, a fouling, or the like. If it is known in advance what kind of sport relay live video the material content is, it is possible to grasp in advance who the player is and what kind of characteristic motion and typical motion are made. Accordingly, the content processor 202 extracts scenes including an element in the live relay video on the basis of information on the player and information on the motion determined in advance according to the type of sport.

In a case where the sport is a team competition, the first team button 303 and the second team button 304 as tab switching buttons may be used to switch a team whose icon is displayed in the icon display area 301.

In the UI, the user moves an icon of the player that the user wants to view to the editing area 302. Then, when the live relay of the sport game is started, the content processing apparatus 200 detects the player indicated by the icon from the live video by subject detection processing, extracts scenes in which the player appears, and aligns the scenes in order of the image capturing time to generate new content. By displaying the new content on the device 100, the user can view a video in which only the favorite player and scenes that the user wants to view are collected also in the sport relay.

Note that only icons indicating motions may be arranged in the editing area 302, or both icons of players and icons of motions may be arranged.

Moreover, as in the embodiment, it is possible to adjust the amount of scenes in which the player or the motion indicated by the icon appears in the new content by changing the size of the icon of the player or the icon of the motion.

Furthermore, as in the embodiment, a scene in which a plurality of players simultaneously appears can be incorporated in the new content by superimposing icons of the plurality of players. Furthermore, as in the embodiment, a scene in which the player is making the motion can be incorporated in the new content by superimposing the icon of the player and the icon of the motion.

Therefore, the user can view or save a video in which only the favorite player or scenes that the user wants to view are collected also in the sport relay.

In the case of a live relay, although the basic configuration of the UI is similar to that in the embodiment illustrated in Fig. 3, a Live button 308 is provided instead of the export button 307. The new content is generated on the basis of the state of the icon in the editing area 302 to be used for input to the Live button 308.

In a case where the present technology is applied to a live video in this manner, a device 100 that displays the UI and accepts the input by the user and a device 100 that displays the new content and presents the new content to the user may be different devices 100. For example, a UI may be displayed on a smartphone to accept an input by a user, and processing by the content processor 202 and display of new content may be performed on a television. In this case, the input information accepted by the smartphone needs to be supplied to the television through a network, direct communication between devices 100, or the like.

Note that, in a case where the player can be identified by an item other than the face, such as the uniform or the uniform number, the uniform or the uniform number of the player may be displayed as an icon.

Note that the present technology can be applied not only to sport relays but also to music live relays, press conference relays, news program relays, live TV programs, and the like.

### <3. Modification>

Although embodiments of the present technology have been specifically described above, the present technology is not limited to the above-described embodiment, and various modifications based on the technical idea of the present technology can be made.

The content in the present technology may be any content as long as one content can be configured by extracting and aligning parts of voice content, image content, or the like instead of video content.

A title, a summary comment, and the like may be automatically generated from information such as the generation date of new content, the image capturing date of material content, or the name of a detected person, and added to the new content.

As the order of aligning the scenes extracted from the material content, elements indicated by icons may be aligned so as to appear alternately, instead of order of image capturing date and time, order of smile, order of the number of persons, or order of sound volume described in the embodiment.

The element of the material content indicated by the icon that is the operation target may be an element other than a person, a motion, and a color described in the embodiment. For example, the element of the material content may be information regarding a camera that has captured the material content. Examples of information regarding a camera include device identification information of the camera, a lens type, lens performance (F value, focal length, etc.), camera performance (the number of pixels, etc.), and various setting values of the camera at the time of image capturing. For example, in a case where the device identification information of the camera is displayed as an icon as an element of the material content, it is possible to generate new content including only videos captured by a specific camera from among a plurality of material contents captured by a plurality of cameras by moving the icon to the editing area 302. Similarly, it is also possible to generate new content including videos captured with a specific lens or videos captured with a specific camera setting.

The present technology can also have the following configurations.
(1) A content processing apparatus including a content processor that generates new content on the basis of a state of one or a plurality of operation targets selected by a user from among a plurality of operation targets indicating one or a plurality of elements of material content.
(2) The content processing apparatus according to (1), in which the new content is generated by extracting and aligning a plurality of scenes including an element of the material content indicated by the operation target from the material content.
(3) The content processing apparatus according to (1) or (2), in which the state is a size of the operation target, and indicates the amount of a scene including an element of the material content indicated by the operation target in the new content.
(4) The content processing apparatus according to any one of (1) to (3), in which the state is a superimposed state of a plurality of the operation targets, and indicates a combination of elements of the material content respectively indicated by the plurality of operation targets.
(5) The content processing apparatus according to any one of (1) to (4), in which the state is a size of a region where a plurality of the operation targets overlaps each other, and indicates the amount of a scene including a combination of elements of the material content respectively indicated by the plurality of operation targets in the new content.
(6) The content processing apparatus according to any one of (1) to (5), in which the operation target indicates a subject detected from the material content.
(7) The content processing apparatus according to any one of (1) to (6), in which the operation target indicates a motion detected from the material content.
(8) The content processing apparatus according to any one of (1) to (7), in which the operation target indicates a color detected from the material content.
(9) The content processing apparatus according to any one of (1) to (8), in which the operation target indicates information regarding a camera that has captured the material content.
(10) The content processing apparatus according to any one of (2) to (9), in which the new content is generated by aligning the plurality of scenes in order of any one of image capturing date and time, the number of subjects, the number of smiles or a degree of a smile of a person as the subject, and sound volume.
(11) The content processing apparatus according to any one of (2) to (9), in which a scene including an element indicated by the operation target is extracted from the material content on the basis of any one or a combination of image capturing date and time, a result of smile detection, and sound volume.
(12) The content processing apparatus according to any one of (2) to (9), in which the new content is generated without setting a length in advance.
(13) The content processing apparatus according to (12), in which a size of the operation target indicates an absolute amount of a scene including an element of the material content indicated by the operation target in the new content.
(14) The content processing apparatus according to any one of (2) to (13), in which the new content is generated in accordance with a preset length of the new content.
(15) The content processing apparatus according to (14), in which a size of the operation target indicates a ratio of a scene including an element of the material content indicated by the operation target in the new content.
(16) The content processing apparatus according to any one of (1) to (15), in which the material content is a captured video.
(17) The content processing apparatus according to (16), in which an element indicated by the operation target is extracted from the material content by detection processing.
(18) The content processing apparatus according to any one of (1) to (17), in which the material content is a live relay video.
(19) The content processing apparatus according to (16), in which an element indicated by the operation target is extracted from the material content on the basis of predetermined information.
(20) A content processing method including
   generating new content on the basis of a state of one or a plurality of operation targets selected by a user from among a plurality of operation targets indicating one or a plurality of elements of material content.
(21) A content processing program capable of causing a computer to execute a content processing method including
   generating new content on the basis of a state of one or a plurality of operation targets selected by a user from among a plurality of operation targets indicating one or a plurality of elements of material content.

### REFERENCE SIGNS LIST

- 200: Content processing apparatus
- 202: Content processor

## Claims

1. A content processing apparatus comprising
a content processor that generates new content on a basis of a state of one or a plurality of operation targets selected by a user from among a plurality of operation targets indicating one or a plurality of elements of material content.

2. The content processing apparatus according to claim 1,
wherein the new content is generated by extracting and aligning a plurality of scenes including an element of the material content indicated by the operation target from the material content.

3. The content processing apparatus according to claim 1,
wherein the state is a size of the operation target, and indicates an amount of a scene including an element of the material content indicated by the operation target in the new content.

4. The content processing apparatus according to claim 1,
wherein the state is a superimposed state of a plurality of the operation targets, and indicates a combination of elements of the material content respectively indicated by the plurality of operation targets.

5. The content processing apparatus according to claim 1,
wherein the state is a size of a region where a plurality of the operation targets overlaps each other, and indicates an amount of a scene including a combination of elements of the material content respectively indicated by the plurality of operation targets in the new content.

6. The content processing apparatus according to claim 1,
wherein the operation target indicates a subject detected from the material content.

7. The content processing apparatus according to claim 1,
wherein the operation target indicates a motion detected from the material content.

8. The content processing apparatus according to claim 1,
wherein the operation target indicates a color detected from the material content.

9. The content processing apparatus according to claim 1,
wherein the operation target indicates information regarding a camera that has captured the material content.

10. The content processing apparatus according to claim 2,
wherein the new content is generated by aligning the plurality of scenes in order of any one of image capturing date and time, the number of subjects, the number of smiles or a degree of a smile of a person as the subject, and sound volume.

11. The content processing apparatus according to claim 2,
wherein a scene including an element indicated by the operation target is extracted from the material content on a basis of any one or a combination of image capturing date and time, a result of smile detection, and sound volume.

12. The content processing apparatus according to claim 2,
wherein the new content is generated without setting a length in advance.

13. The content processing apparatus according to 12,
wherein a size of the operation target indicates an absolute amount of a scene including an element of the material content indicated by the operation target in the new content.

14. The content processing apparatus according to claim 2,
wherein the new content is generated in accordance with a preset length of the new content.

15. The content processing apparatus according to 14,
wherein a size of the operation target indicates a ratio of a scene including an element of the material content indicated by the operation target in the new content.

16. The content processing apparatus according to claim 1,
wherein the material content is a captured video.

17. The content processing apparatus according to claim 16,
wherein an element indicated by the operation target is extracted from the material content by detection processing.

18. The content processing apparatus according to claim 1,
wherein the material content is a live relay video.

19. The content processing apparatus according to claim 18,
wherein an element indicated by the operation target is extracted from the material content on a basis of predetermined information.

20. A content processing method comprising
generating new content on a basis of a state of one or a plurality of operation targets selected by a user from among a plurality of operation targets indicating one or a plurality of elements of material content.

21. A content processing program capable of causing a computer to execute a content processing method comprising
generating new content on a basis of a state of one or a plurality of operation targets selected by a user from among a plurality of operation targets indicating one or a plurality of elements of material content.
